# EUROPEAN PATENT APPLICATION

(11) **EP 1 557 647 A2**
(43) Date of publication of application: **27.07.2005**
(21) Application number: 05000922.4
(22) Date of filing: 18.01.2005
(51) Int. Cl.: G01D 5/347, G01D 5/26

(54) **Optical encoder with shielding means.**

(30) Priority: 20.01.2004 JP 2004011743
(71) Applicant: FANUC LTD, Minamitsuru-gun, Yamanashi 401-0597 (JP)
(72) Inventor: Kawai, Tomohiko, 1770-1, Kawaguchi, Yamanashi 401-0304 (JP); Taniguchi, Mitsuyuki, Gotenba-shi Shizuoka 412-0045 (JP); Oda, Takayuki, Oshino-mura Minamitsuru-gun Yamanashi (JP)
(74) Representative: Schmidt, Steffen J., Dipl.-Ing.

(57) **Abstract**

An optical encoder includes a moving scale (1), a light source (2) which is always kept lighted, a fixed slit (3) and a light receiving array (4) having a plurality of light receiving units (41, 42). The light from the light source (2) is radiated toward the moving scale (1), thereby to generate signal light for a plurality of channels. The signal light for each channel passes through the opening (31; 32) of the fixed slit (3). The light passed through the opening (31) enters the light receiving unit (41), while the light passed through the opening (32) enters the light receiving unit (42). A plate-shaped light shield member (5) is interposed between the fixed slit (3) and the light receiving array (4) to optically separate the light passed through the opening (31) toward the light receiving unit (42) from the light passed through the opening (32) toward the light receiving unit (42) and thereby to prevent crosstalk between the channels.

## Description

### BACKGROUND OF THE INVENTION

### 1. Field of the Invention

The present invention relates to an optical encoder for detecting a position and velocity of a servo motor for driving, for example, an axis of a machine tool or an industrial robot or, more particularly, to an optical encoder including a means for attenuating the crosstalk between a plurality of channels.

### 2. Description of the Related Art

An optical encoder is used in a wide range of applications to detect a position and velocity of a servo motor for driving an axis of a machine tool or an industrial robot. As well known, an optical encoder is a device in which a transmitted light or reflected light encoded by a moving scale is received by a light receiving unit to generate an electrical signal and, generally, electrical signals are generated for a plurality of channels. Thus, the encoded light is received by a plurality of light receiving units associated with the channels for the transmitted light. At this time, a crosstalk between the channels causes a problem. An increased amount of crosstalk is not desirable because it naturally results in a reduced S-to-N ratio for the encoder signal.

Japanese Unexamined Patent Publication No. 2003-65802 discloses an optical encoder which can prevent such a crosstalk. This optical encoder is provided with a plurality of light sources (LEDs) each associated with each of a plurality of channels, and one of these light sources is sequentially lighted at a time in a time-shared manner. When each light source is lighted, a corresponding electrical signal is obtained from the channel associated with the light sources, so that the crosstalk is prevented. However, in this type of optical encoder, while a light sensitive element constituting the light receiving unit for one channel receives an optical signal, an optical signal cannot be received in other channels. Therefore, as compared with a case where the light sources (LEDs) are always lighted and the signals for a plurality of channels are generated concurrently, the number of signal that can be processed per unit time is reduced to lower the resolution.

### SUMMARY OF THE INVENTION

Accordingly, it is an object of the present invention to resolve the problems of the prior art described above and to provide an optical encoder in which a light source is always lighted to allow the signals for a plurality of channels to be generated concurrently, while at the same time suppressing the crosstalk between the channels.

The present invention solves the above-mentioned problem by providing a light shield member in a light receiving array for optically separating the channels from each other.

More specifically, according to the present invention, there is provided an optical encoder which includes a moving scale formed with an optical slit, a light source for radiating light to the moving scale, a fixed slit and a light receiving array having a plurality of light receiving units, the plurality of light receiving units receiving, through the fixed slit, a light transmitted through the moving scale or a light reflected on the moving scale thereby to generate electrical signals for a plurality of channels, wherein at least one light shield member is interposed between the fixed slit and the light receiving array for optically separating the plurality of light receiving units, respectively associated with the plurality of channels, from each other.

The light shield member is typically of a plate-like shape. Also, preferably, the light shield member has a non-light-reflective surface in order to prevent the reflected light from causing a noise. The non-light-reflective surface is formed, for example, by applying or coating thereto a material which does not reflect light. Further, the fixed slit and the light receiving array may be mechanically coupled to each other by the light shield member.

The optical encoder according to the present invention makes it possible to always light the light source and generate the signals for the plurality of channels concurrently while at the same time suppressing crosstalk between the channels.

### BRIEF DESCRIPTION OF THE DRAWINGS

The above and other objects, features and advantage of the present invention will be described in more detail below based on the preferred embodiments of the present invention with reference to the accompanying drawings, wherein:
Fig. 1 is a perspective view showing a general construction of an optical encoder according to an embodiment of the present invention; and
Fig. 2 is a perspective view showing an optical encoder according to another embodiment of the present invention.

### DETAILED DESCRIPTION

An embodiment of the invention will be described below with reference to the drawings.

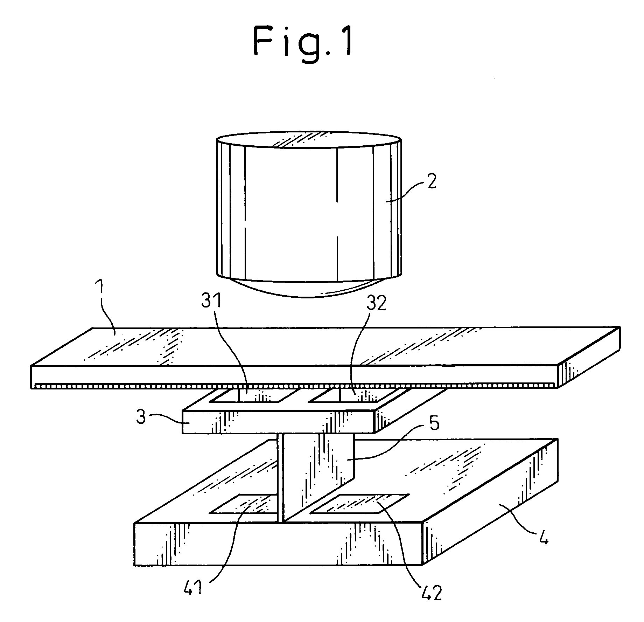

Referring to Fig. 1, reference numeral 1 designates a moving scale formed with an optical code defined in a well-known manner by a predetermined pattern of a transparent area and a nontransparent area. For the convenience of illustration, the moving scale 1 in this case is shown having a linear shape. However, for a rotary type of encoder, a moving scale having a circular shape is used. A light source 2 includes one or more LEDs and radiates light toward the moving scale 1. The light source 2 is always kept lighted by a light emission control circuit (not shown), during the detecting process.

In accordance with a movement of an object having the moving scale 1 mounted thereon (an object of which a position and velocity are detected), the moving scale 1 outputs, as a transmission light, a part of the light emitted from the light source 2. The output transmission light includes signal lights for a plurality of channels (two channels in this case). A fixed slit 3 having openings 31, 32 is arranged on the optical output side of the moving scale, so that the signal light for each channel can pass through the openings 31, 32. In this example, one of two signal lights for the two channels passes through the opening 31, while the signal light for the other channel passes through the opening 32.

Further, a light receiving array 4 is disposed at a predetermined distance from the fixed slit 3. The light receiving array 4 has as many light receiving units as there are channels. In this embodiment, the light receiving units 41, 42 are disposed at locations suitable for receiving the light passed through the openings 31, 32. Each of the light receiving units 41, 42 consists of at least one light sensitive element.

A light shield member 5 for preventing crosstalk between the adjacent channels is interposed between the adjacent light receiving units 41 and 42 for the adjacent channels. The light shield member 5 typically comprises a plate-shaped member forming a vertical wall as shown in Fig. 1. However, a member having any shape may be used as the light shield member 5, as long as it has a light shielding function to prevent crosstalk between the channels and does not inhibit the channels from receiving light.

Preferably, the light shield member 5 has a non-light-reflective surface (for example, adapted to absorb 90 % or more light) formed by an application or coating of a material which does not reflect light. Examples of the material suitable to prevent light reflection include a matte black paint, alumite coating and the like.

The stray light, if generated by reflection on the surface of the light shield member 5, might result in a crosstalk noise. However, the non-light-reflective surface of the light shield member 5 makes it possible to reduce the possibility of crosstalk noise generation. Due to the presence of the light shield member 5, the light passed through the opening 31 entirely enters the light receiving unit 41 and hardly enters the light receiving unit 42. Similarly, the light passed through the opening 32 entirely enters the light receiving unit 42 and hardly enters the light receiving unit 41. As a result, even if the signal lights for the two channels are concurrently input to the light receiving array, substantially no crosstalk is caused.

The light shield member 5 is interposed between the fixed slit 3 and the light receiving array 4. Therefore, the light shield member 5 can serve to couple the fixed slit 3 and the light receiving array 4 mechanically to each other. In such a case, the light shield member 5 is fabricated integrally as a vertical wall portion of the light receiving array 4, and the top of the vertical wall portion is mounted between the openings 31, 32 of the fixed slit 3 by screws, adhesive or the like.

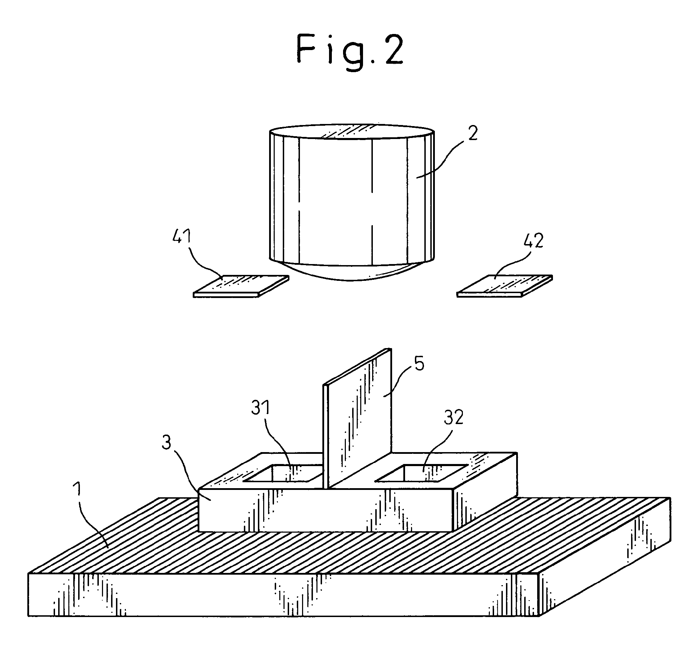

Although an example of the arrangement for the transmission light detection type of optical encoder in which the light transmitted through the moving scale is detected as an signal light has been described in the embodiment described above, it may not be particularly required to explain that the present invention is similarly applicable to the arrangement for the reflected light detection type of optical encoder in which the light reflected on the moving scale 1 is detected as a signal light. In the arrangement for the reflected light detection type, as shown in Fig. 2, the light source 2 is arranged between adjacent fixed slits 3. The light shield member 5 is interposed between the fixed slit 3 and the light receiving array 4 and therefore, no problem is posed.

While the present invention has been described with reference to the embodiments shown in the accompanying drawings, these embodiments are only illustrative and are not restrictive. Therefore, the scope of the present invention is limited by the appended claims and the preferred embodiments of the present invention can be modified or changed without departing from the scope of the claims.

## Claims

1. An optical encoder comprising a moving scale (1) formed with an optical slit, a light source (2) for radiating light to said moving scale, a fixed slit (3), and a light receiving array (4) having a plurality of light receiving units (41, 42), said plurality of light receiving units receiving, through said fixed slit, a light transmitted through said moving scale or a light reflected on said moving scale thereby to generate electrical signals for a plurality of channels, said optical encoder **characterized in that**:
said at least one light shield member (5) is interposed between said fixed slit (3) and said light receiving array (4) for optically separating said plurality of light receiving units (41, 42) associated with said plurality of channels, respectively, from each other.

2. The optical encoder according to claim 1, wherein said light shield member (5) is of a plate-like shape.

3. The optical encoder according to claim 1 or 2, wherein said shield member (5) has a non-light-reflective surface.

4. The optical encoder according to claim 3, wherein said non-light-reflective surface is formed by an application or a coating of a material which does not reflect light.

5. The optical encoder according to any one of claims 1 to 4, wherein said fixed slit (3) and said light receiving array (4) are mechanically coupled to each other by said light shield member (5).
